# EUROPÄISCHE PATENTANMELDUNG

(11) **EP 1 113 061 A2**
(43) Veröffentlichungstag der Anmeldung: **04.07.2001**
(21) Anmeldenummer: 00127141.0
(22) Anmeldetag: 12.12.2000
(51) Int. Cl.: C09J 7/02, B65D 33/34

(54) **Klebeband zum Nachweis des unbefugten Öffnens einer Verpackung**

(30) Priorität: 29.12.1999 DE 19963710
(71) Anmelder: Beiersdorf AG, 20245 Hamburg (DE)
(72) Erfinder: Wenninger, Dieter, Dr., 22765 Hamburg (DE); David, Wolfgang, 21149 Hamburg (DE); Schliephacke, Ralf, 25524 Itzehoe (DE)

(57) **Zusammenfassung**

Verwendung eines Klebebandes zum Nachweis des unbefugten Öffnens einer Verpackung, indem das Klebeband beim Entfernen von der Oberfläche einer Verpackung irreversibel zerstört wird und einen Öffnungsversuch klar anzeigt durch Zerreißen oder Spalten in Dickenrichtung, wobei das Klebeband einen Träger auf Basis von Zelluloseacetat, Zellulosediacetat, -triacetat oder Zellulosehydrat mit geringer Weiterreißfestigkeit aufweist, dessen eine Seite mit einer Klebemasse versehen ist.

## Beschreibung

Die Erfindung bezieht sich auf ein Klebeband mit einem einschichtigen Träger auf Basis von Zelluloseacetat oder Zellulosehydrat, der einseitig mit Klebemasse beschichtet ist, zur Verwendung zum Nachweis des unbefugten Öffnens einer Verpackung.

Diebstahl, Produktpiraterie und Erpressungen von zum Beispiel Nahrungsmittelkonzernen und Handelsketten führen zu immer größeren wirtschaftlichen Verlusten und Schäden. Der Einsatz von Sicherheitssystemen beziehungsweise Sicherheitsverschlüssen zum Schutz vor unbemerktem Öffnen von Gütem und der damit verbundenen Möglichkeit der Manipulation des Inhalts ist somit von wachsender Bedeutung.

Sicherheitssysteme zum Nachweis des unbefugten Öffnens sind bekannt und in Vielzahl von Patenten beschrieben. Hierbei sind besonders Sicherheitsetiketten von großer Bedeutung. So werden zum Beispiel in US 4,184,701 Sicherheitsetiketten beschrieben, die aus mehreren Farb- beziehungsweise Trennschichten aufgebaut sind und dadurch eine geringe Haftung der Produktschichten untereinander aufweisen. In Kombination mit einer stark haftenden Klebemasse trennen sich derartige Schichten irreversibel voneinander, wodurch die Öffnung der Verpackung angezeigt wird.

Weiterhin wird beispielsweise in DE 34 31 239 A1 die Verwendung von Sicherheitsetiketten zum Nachweis des unbefugten Öffnens einer Verpackung beschrieben, bestehend aus einem Trägermaterial mit geringer Weiterreißfestigkeit. In Kombination mit einer stark haftenden Klebemasse wird das Sicherheitsetikett beim Enffernen irreversibel zerstört und somit der Öffnungsversuch angezeigt.

Das Sicherheitsetikett weist eine untere, von einem Träger abzulösende und auf die Verpackung aufzubringende erste Klebstoffschicht auf der Unterseite eines ersten Etikettenmaterials auf, auf dessen Oberseite über eine zweite Klebstoffschicht ein zweites Etikettenmaterial aufgebracht ist. Die Stärke der Klebkraft der ersten Klebstoffschicht zwischen der Verpackung und dem ersten Etikettenmaterial ist verschieden von der Stärke der Klebkraft der zweiten Klebstoffschicht zwischen dem ersten Etikettenmaterial und dem zweiten Etikettenmaterial.
Verpackungsklebebänder zum Nachweis des unbefugten Öffnens von Verpackungskartons und anderen Verpackungen sind ebenfalls bekannt. So werden zum Beispiel in EP 0 404 402 A2 und US 4,876,123 mehrschichtige Kartonverschlußbänder beschrieben, die beim Öffnungsversuch einen Buchstabenübertrag auf die Verpackungsoberfläche gewährleisten und somit eine Öffnungssicherung darstellen. Hierzu ist allerdings eine relativ große und zugleich ebene Verklebungsfläche notwendig.

Im Falle des Einsatzes von Sicherheitsetiketten zur Öffnungssicherung ist die Verwendung eines geeigneten Trennpapiers notwendig, um maschinell Sicherheitsetiketten applizieren zu können. Bedingt durch die Verwendung des notwendigen Trennpapiers resultiert eine ungünstig hohe Komplexität beim Handling von Sicherheitsetiketten, ein Anfall großer Mengen an Trennpapier als Abfallprodukt nach der Applikation der Etiketten und eine sehr geringe Flexibilität bei der Anpassung des Sicherheitsverschlusses an das jeweilige Verpackungssystem beziehungsweise an das jeweilige Öffnungssystem der Verpackung. Eine bestimmte Art von Sicherheitsetiketten kann auf Grund der festgelegten Größe und Struktur des Etiketts nur für eine bestimmte Verpackung angewendet werden.

Im Falle der Sicherheitsetiketten und der bekannten Kartonverschlußklebebänder für eine Produktsicherung sind bedingt durch den mehrschichtigen Produktaufbau und durch den Einsatz von Farb- und Trennschichten zur Herstellung derartiger Sicherheitssysteme komplizierte und aufwendige Produktionskonzepte notwendig. Bei der Verwendung dieser Klebebänder als Produktsicherung ist auf Grund des Produktaufbaus der Nachweis des unbefugten Öffnens bei der Verklebung von komplexen Produktverschlüssen beziehungsweise von komplizierten Consumerprodukten nicht zufriedenstellend.

Die ebenfalls als zum Nachweis des unbefugten Öffnens verwendbaren Schrumpffolien (Sleeves) zeigen Nachteile in zum Teil mangelnder Individualisierung und durch sehr hohen Materialverbrauch.

Folien auf Basis von Zellulosederivaten, Zellulosehydrat (Cellophan) und Zelluloseacetat finden hauptsächlich in der Verpackungsindustrie und bei Herstellern von Etiketten Verwendung. Folien auf Basis von Zellulosehydrat finden teilweise als Verpackungsklebebänder Verwendung, werden hierbei aber zunehmend durch Träger auf Basis von Thermoplastfolien verdrängt.

Zellulosederivate werden als Gießfolien (Solution casting process) hergestellt und sind hierbei in einem Dickenbereich von ca. 12 µm bis 100 µm erhältlich.

Folien auf Basis von Zelluloseacetat werden von Etikettenherstellem als Trägermaterial verwendet. Auf Grund der geringen Weiterreißfestigkeit kommen Etiketten mit einem Träger auf Basis von Zelluloseacetat im Bereich der Sicherheitsetiketten zum Nachweis des unbefugten Öffnens zum Einsatz. Zur Zeit sind Folien auf Basis von Zellulose-diacetat, -2 ½ acetat und -triacetat verfügbar. Die Eigenschaften der Folien auf Basis von Zelluloseacetat stellen sich als eine Funktion der Anzahl der Acetatgruppen pro Zellulosemolekül dar. Folien mit hoher Acetatkonzentration zeigen eine reduzierte Empfindlichkeit gegenüber Feuchtigkeit, eine minimale Absorption von Wasser. Die Folien sind weiterhin stabil bei hohen Temperaturen und hoher Luftfeuchtigkeit.
Durch Vernetzung der Zellulosemoleküle der Folie kann die Weiterreißfestigkeit deutlich reduziert werden.

All diese Folienvarianten enthalten Weichmacher, wie beispielsweise Phthalate, Alkohole oder Triphenylphosphate, und werden fast ausschliesslich als Gießfolien (Solution casting process) hergestellt. Die Gießlösung hat hierbei eine Zelluloseacetatkonzentration von 18 bis 26 % und eine Viskosität von 15 bis 30 Pas.

Bei Verwendung von Folien ist die Art des eingesetzten Längsschneidverfahrens wichtig für die Reißfestigkeit und Reißdehnung des Produktes. Die mit der Wahl des eingesetzten Längsschneidverfahrens resultierende Schnittkantenqualität kann zum einen eine scharfkantige Schnittkante und zum anderen eine rauhe Schnittkante erzeugen, die deutlich die Reißfestigkeit und Reißdehnung der längsgeschnittenen Folien beeinflußt. Die Reduzierung der Reißfestigkeit kann dazu genutzt werden ein Klebeband nach der Applikation nicht mehr zerstörungsfrei vom verklebten Untergrund entfernen zu können.

Durch Einsatz speziell geeigneter Schneidvarianten kann somit der Sicherheitseffekt von Klebebändern zum Nachweis des unbefugten Öffnens einer Verpackung deutlich gesteigert und der Einsatz derartiger Produkte verbreitert werden.

Aufgabe der vorliegenden Erfindung ist es, die Verwendung eines Klebebands anzugeben, das beim Entfernen von der Oberfläche der Verpackung zerstört wird und sich selbst irreversibel aufteilt beziehungsweise zerreißt, das ein Wiederanhaften im ursprünglichen Zustand unmöglich macht, so daß ein Nachweis von Manipulationen quantitativer oder qualitativer Art am verpackten Produkt erkennbar ist.

Gelöst wird diese Aufgabe durch die Verwendung eines Klebebands, wie es im Hauptanspruch dargelegt ist. Gegenstand der Unteransprüche sind vorteilhafte Fortbildungen des Erfindungsgegenstandes.

Demgemäß betrifft die Erfindung die Verwendung eines Klebebandes zum Nachweis des unbefugten Öffnens einer Verpackung, indem das Klebeband beim Entfernen von der Oberfläche einer Verpackung irreversibel zerstört wird und einen Öffnungsversuch klar anzeigt durch Zerreißen oder Spalten in Dickenrichtung. Das Klebeband besitzt einen Träger in Form einer Folie auf Basis von Zelluloseacetat, Zellulosediacetat, -triacetat oder Zellulosehydrat mit geringer Weiterreißfestigkeit, wobei der Träger einseitig mit einer Klebemasse beschichtet ist.

Träger auf Basis von Zelluloseacetat, Zellulosediacetat, -triacetat oder Zellulosehydrat werden, wie bereits oben ausgeführt, als Verpackungsmaterialien eingesetzt. Die Dicken der einschichtigen Gießfolien zur Herstellung der erfindungsgemäßen Klebebänder liegen zwischen 15 und 90 µm, bevorzugt zwischen 20 bis 70 µm. In einer besonders bevorzugten Variante liegen die Dicken zwischen 30 und 50 µm.

Folien auf Basis modifizierter Zellulose können durch den Solution Casting Process hergestellt werden. Hierbei ist die Vernetzung der Zellulosemoleküle während des Herstellungsprozesses möglich, wodurch die bereits erwähnte Verringerung der Weiterreißfestigkeit erzielt werden kann.

In einer weiteren vorteilhaften Ausführungsform des Klebebands ist zwischen dem Träger und der Klebeschicht eine Schicht aus einem Primer aufgebracht.

In einer weiteren vorteilhaften Ausführungsform des Klebebands trägt der Träger auf der der Klebemasse gegenüberliegenden Seite eine Lackierung, insbesondere eine Trennlackierung.

Trennlackierungen auf die der Klebemasse gegenüberliegenden Oberfläche werden in der Klebebandindustrie weit verbreitet eingesetzt. Eine Übersicht über Trennlacksysteme auf Basis von Silikon und deren Einsatz im Bereich Pressure Sensitive Adhesives findet sich in "Silicone Release coating" (D. Jones, Y. A. Peters in Handbook of Pressure Sensitive Adhesive Technology, Third Edition, edited by Donatas Satas, Van Reinhold New York. Pp. 652-683).

Durch den Einsatz von Rückseitentrennlackierungen wird ein leichtes, gleichmäßiges Abrollen der Klebebänder erzielt. Hierbei werden vor allem Trennlackierungen auf Basis von lösemittelhaltigen Carbamatsystemen und auf Basis von auf Silikon basierenden Systemen eingesetzt.

Trennlackierungen auf Basis von Silikonsystemen eignen sich besonders als Trennlackierungen der erfindungsgemäßen Klebebänder. Bevorzugt als Trennlackierung sind UV-härtende Silikonsysteme auf 100% Basis, aber ebenso lösemittelhaltige Silikonsysteme können als Trennlackierung für die erfindungsgemäßen Klebebänder eingesetzt werden.

Die Auftragsmenge der Trennlackierung auf das Trägermaterial beträgt bevorzugt 0,1 bis 3 g/qm. In einer weiteren besonders bevorzugten Ausführung wird der Schichtauftrag der Trennlackierung von 0,2 bis 1,5 g/qm eingestellt.

Als Klebemassen können im wesentlichen alle bekannten Klebemassen mit hoher Klebkraft auf dem zu verpackenden Haftgrund eingesetzt werden.
Die Klebemasse des erfindungsgemäßen Klebebandes kann aus einer Klebemasse auf Basis von lösemittelhaltigen Naturkautschuk- und Acrylatklebemassen bestehen. Bevorzugt sind Klebemassen auf Basis von Acrylatdispersionen, besonders bevorzugt sind Klebemassen auf Basis von Styrol-lsopren-Styrol-Blockcopolymeren. Diese Klebemassentechnologien sind bekannt und werden in der Klebebandindustrie eingesetzt.

Die Auftragsmenge der Klebemasse auf das Trägermaterial beträgt bevorzugt 15 bis 60 g/qm. In einer weiteren bevorzugten Ausführung wird der Schichtauftrag von 20 bis 30 g/qm eingestellt.

Die Herstellung der Klebebänder kann nach bekannten Verfahren erfolgen. Eine Übersicht über übliche Herstellungsverfahren findet sich beispielsweise in "Coating Equipment", Donatas Satas in Handbook of Pressure Sensitive Adhesive Technology, second edition, edited by Donatas Satas, Van Nostrand Reinhold New York pp. 767-808. Die bekannten Verfahren zum Trocknen und Schneiden der Klebebänder sind ebenfalls im Handbook of Pressure Sensitive Adhesive Technology, Seite 809-874 zu finden.
Die erfindungsgemäßen Klebebänder können darüber hinaus mittels üblicher Verfahren bedruckt werden.

Als Längsschneidverfahren wird bei den erfindungsgemäßen Klebebändern das Quetsch-Schneidverfahren eingesetzt, das durch ein unter einer Anpreßkraft stehendes rotierendes Kreismesser und einem Gegendruckzylinder das dazwischen liegende Klebeband in Laufrichtung der Klebebandbahn trennt.
Das rotierende Kreismesser kann durch unterschiedliche Geometrien der Schneide und durch verschiedene Oberflächenrauhigkeiten an den Schneideflanken so gestaltet werden, daß das geschnittene Klebeband in seiner Schnittkantenrauhigkeit beeinflußt wird.
Die Schnittkantenrauhigkeit beeinflußt direkt die Reißfestigkeit des geschnittenen Klebebandes, d.h., je rauher die Schnittkante, desto niedriger die Reißfestigkeit des Klebebandes.

Die Reduzierung der Reißfestigkeit kann dazu genutzt werden, ein Klebeband nach der Applikation nicht mehr zerstörungsfrei vom verklebten Untergrund entfernen zu können.

Durch Einsatz speziell geeigneter Schneidvarianten kann somit der Sicherheitseffekt von Klebebändern zum Nachweis des unbefugten Öffnens einer Verpackung deutlich gesteigert und der Einsatz derartiger Produkte verbreitert werden.

Vorzugsweise weisen die Kanten des Trägers daher einen Zackenschnitt auf.

Das erfindungsgemäße Klebeband ist für die Anwendung als Sicherheitsverschluß zur deutlichen Erkennung eines unbefugten Öffnungsversuches beziehungsweise einer Öffnung für eine große Anzahl wertvoller beziehungsweise sensibler Güter geeignet. Ein wichtiges Anwendungsfeld ist hierbei die Sicherung verschiedenster Konsumgüter gegen Diebstahl, Verfälschung des Inhalts und der Schutz vor Raubkopien: Das unbemerkte Öffnen, Diebstahl und Verfälschung sensibler Güter wird durch die Anwendung der erfindungsgemäßen Klebebänder vermieden.

Als Verpackungen kommen unter anderem in Betracht: Faltschachteln, Flaschen und Tuben mit Schraub- und Druckverschlüssen, Shampooflaschen, Faltschachteln, Kunststoffdosen und -behälter.
Unter anderem sind als Oberfläche für das Verpackungsmaterial Papier, Karton, Glas, Polypropylen, Polystyrol, Polyvinylchlorid und Stahl geeignet.

Hierbei sind Anwendungen im Bürobereich, bei der Verpackung von medizinischen und pharmazeutischen Produkten, die Sicherung von Kosmetika und Körperpflegeartikeln sowie von Nahrungs- und Genußmitteln mittels Sicherheitsverschluß möglich. Weiterhin ist eine Anwendung zur Sicherung von elektronischen und elektrischen Geräten möglich.

Durch Verwendung eines Klebebandes als Sicherheitsverschluß zum Schutz des unbefugten Öffnens wird die Verwendung eines Trennpapiers, wie bei Verwendung von Sicherheitsetiketten notwendig, überflüssig. Hierdurch werden zum einen erhebliche Kosten eingespart, zum anderen die Komplexität verringert und die resultierende Abfallmenge stark reduziert. Weiterhin wird durch die Verwendung eines Klebebandes zur Verpackung beziehungsweise Sicherung von Produkten die Flexibilität der einsetzbaren Verpackungs- und Verschlußtypen gesteigert. Durch leichtes Abrollen beim manuellen und maschinellen Applizieren an Verpackungen kann die Größe des Sicherheitsverschluß problemlos variiert und an die Verpackung angepaßt werden.

Wird versucht, einen Klebestreifen des erfindungsgemäßen Klebebandes von der Verpackung zu entfernen, so wird, da die Klebkraft des Sicherheitsverschlusses größer ist als die Trägerfestigkeit, der Träger durch die geringe Weiterreißfestigkeit irreversibel zerstört und der Öffnungsversuch klar und deutlich angezeigt. Dieser Effekt kann durch den Einsatz von speziellen Schneidmodifikationen erhöht werden.

Weiterhin sollen das neue Klebeband leicht abrollen und einen guten Verbund zwischen Klebemasse und Trägerfolie aufweisen.

Im folgenden soll die Erfindung anhand eines Beispiels erläutert werden, ohne die Erfindung unnötig einschränken zu wollen.

### Beispiel

### a: Folie a

Folie a: Folie für die erfindungsgemäßen Klebebänder

Es wurde eine Gießfolie aus Zellulose-triacetat einseitig matt der Fa. Lonza-Folien GmbH verwendet.

| | |
|---|---|
| Foliendicke: | 40 µm |
| Kennzeichnung: | Tacphan EM63 |
| Firma/Hersteller: | Lonza-Folien-GmbH |
| Dichte | 1,3 g/m³ |
| Reißdehnung längs: | >25% |
| Reißfestigkeit: | 75 bis 90 N/mm² |
| Wasseraufnahme | 3 % |

Folie b: Folie für Referenzmuster

Es wurde eine biaxial gereckte Folie auf Basis Polypropylen der Fa. Radici verwendet.

| | |
|---|---|
| Foliendicke | 25 µm |
| Kennzeichnung | Radil T |
| Firma/Hersteller | Fa. Radici |
| Reißdehnung längs | 125 % |
| Reißdehnung quer | 50 % |

Für Folie a und b gilt:
Die gegenüberliegende Oberfläche der Folie, die nicht mit Klebemasse beschichtet wird, wird vor dem Beschichten mit Hilfe der üblichen Technologien mit einer Rückseitenlackierung versehen.

Nur für Folie a gilt:
Folie a wurde ohne weitere Vorbehandlung mit Klebmasse beschichtet. Die Beschichtung erfolgte auf der matten Seite der Folie.

Nur für Folie b (Referenzmuster) gilt:
Die Oberfläche der Folie, die mit Klebemasse beschichtet wurde, wurde vor der Beschichtung Corona behandelt. Die Oberflächenenergie betrug > 42 mN/m.

### b: Verwendete Klebemassen

Es wurde eine Klebemasse auf Basis einer wäßrigen Acrylatdispersion zur Herstellung der erfindungsgemäßen Klebebänder und des Referenzmusters verwendet.

### c: Beschichtung der Klebemasse

Die Beschichtung der Folie a und b mit der Klebemasse erfolgte durch einen Drahtrakel. Das Drahtrakel und die Beschichtungsgeschwindigkeit wurden so eingestellt, daß nach der Trocknung der beschichteten Folie ein Masseauftrag von ca. 25 g/qm gemessen wird. Die Beschichtung erfolgte auf einer Technikumsstreichanlage mit einer Arbeitsbreite von 500 mm und einer Beschichtungsgeschwindigkeit von 10 m/min. Hinter der Beschichtungsstation mit Drahtrakelauftragswerk befand sich ein Trockenkanal, der mit heißer Luft (ca. 100 °C) betrieben wurde. Die beschichtete Folie wurde in einer Breite von 19 mm wie in d beschrieben konfektioniert. Die Bestimmung des Sicherheitseffekts erfolgte nach zweitägiger Lagerung bei 23 °C.

### d: Schneiden der mit Klebemasse beschichteten Folienbahn

Das Längsschneiden der mit Klebemasse beschichteten Folienbahn (Folie a und b) erfolgte mit rotierenden Quetsch-Schneidmessern, die in ihrer Schneide-Geometrie als Zick-Zack-Messer ausgestaltet sind.

| | |
|---|---|
| Zick-Zackmesser | 0,2 mm |
| Zähnezahl: | 604 |
| Schneidphasenwinkel: | 90° |
| Zahnbreite: | 0,2 mm |
| Schnittflächenbreite: | < 0,05 mm |

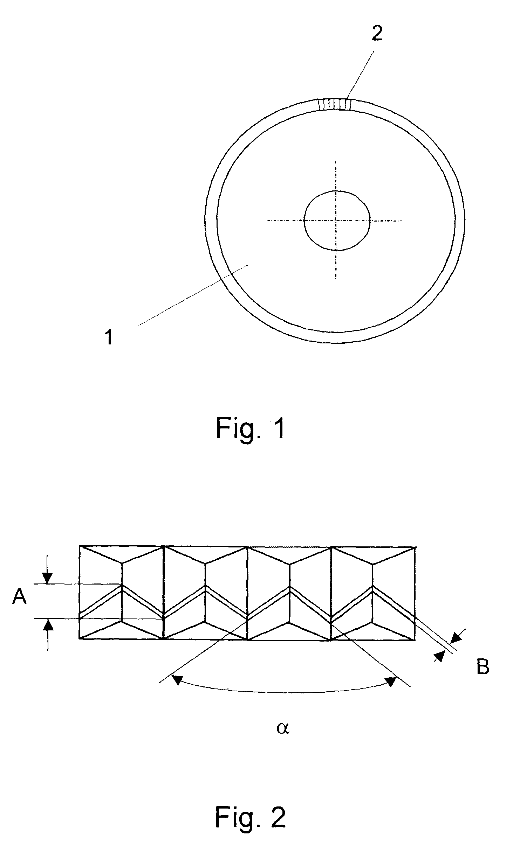

In den Figuren 1 und 2 ist das verwendete Quetsch-Schneidmesser 1 gezeigt. Das Messer 1 hat 604 Zähne 2. Der Schneidphasenwinkel α beträgt α = 90°. Die Zahnbreite A beträgt A = 0,2 mm, die Schnittflächenbreite B liegt unter 0,05 mm.

### e: Haftgründe zur Überprüfung des Sicherheitseffektes

- e1:: Polyethylen: Polyethylenplatten der Fa. Thyssen, Hamburg Kennzeichnung A27120; 50x200 mm; Dicke 3 mm
- e2:: Polystyrol: Polystyrolplatten der Fa. Thyssen, Hamburg Kennzeichnung A27123; 50x200 mm; Dicke 3 mm
- e3:: Polyvinylchlorid: Polyvinylchloridplatten der Fa. Thyssen, Hamburg Kennzeichnung A27126; HPVC-Kömadur; 50x200 mm; Dicke 3 mm
- e4:: Glas: Glasplatten der Glaserei Dietrich, Hamburg; 50x200 mm, Dicke 4,
- e5:: Stahl: Stahlplatten von Thyssen Stahl, nach DIN EN 10088-2, Stahl Typ 1.4301; Rauhigkeit Ra: ab = 0,05 µm
- e6:: Papier (Standard Schreibmaschinen Papier)

### f: Ergebnisse

Zur Bestimmung des Sicherheitseffekts wurden die in c hergestellten Klebebänder untersucht und mit einem Referenzmuster verglichen. Zur Charakterisierung des Sicherheitseffekts auf verschiedenen Haftgründen wurden Klebstreifen (5x1 cm) der Klebebänder und des Referenzmusters auf den in e aufgeführten Oberflächen verklebt und mittels einer 2 kg schweren Stahlrolle angedrückt (zweimaliges Überrollen). Nach einer Wartezeit von 24 Stunden bei 23 °C wurde manuell versucht, inwieweit die Klebestreifen zerstörungsfrei abgezogen beziehungsweise entfernt werden konnten. Hierbei wurden ebenso technische Hilfsmittel, wie zum Beispiel Schere oder Messer, verwendet.

### Referenzmuster:

Klebemasse auf Basis einer wäßrigen Acrylatdispersion.
Träger auf Basis einer biaxial orientierten Polypropylenfolie (Folie b)
Die Herstellung der Referenzmuster erfolgte analog wie in c beschrieben.

### Klebestreifen resultierend aus erfindungsgemäßen Klebebändern (Folie a):

| Haftgrund | Zerstörungsfreies Entfernen von den in e beschriebenen Haftgründen möglich |
|---|---|
| Polyethylen | Nein |
| Polystyrol | Nein |
| Glas | Nein |
| Stahl | Nein |

### Klebestreifen resultierend aus Referenzklebeband (Folie b):

| Haftgrund | Zerstörungsfreies Entfernen von den in e beschriebenen Haftgründen möglich |
|---|---|
| Polyethylen | Ja |
| Polystyrol | Ja |
| Glas | Ja |
| Stahl | Ja |

## Patentansprüche

1. Verwendung eines Klebebandes zum Nachweis des unbefugten Öffnens einer Verpackung, indem das Klebeband beim Entfernen von der Oberfläche einer Verpackung irreversibel zerstört wird und einen Öffnungsversuch klar anzeigt durch Zerreißen oder Spalten in Dickenrichtung, wobei das Klebeband einen Träger auf Basis von Zelluloseacetat, Zellulosediacetat, -triacetat oder Zellulosehydrat mit geringer Weiterreißfestigkeit aufweist, dessen eine Seite mit einer Klebemasse versehen ist.

2. Verwendung nach Anspruch 1, dadurch gekennzeichnet, daß die Dicken des Trägers liegen zwischen 15 und 90 µm, bevorzugt zwischen 20 bis 70 µm.

3. Verwendung nach Anspruch 1, dadurch gekennzeichnet, daß die Kanten des Trägers einen Zackenschnitt aufweisen.

4. Verwendung nach Anspruch 1, dadurch gekennzeichnet, daß zwischen dem Träger und der Klebeschicht eine Schicht aus einem Primer aufgebracht ist.

5. Verwendung nach Anspruch 1, dadurch gekennzeichnet, daß der Träger auf der der Klebemasse gegenüberliegenden Seite eine Lackierung trägt, insbesondere eine Trennlackierung.

6. Verwendung nach Anspruch 1, dadurch gekennzeichnet, daß die Auftragsmenge der Trennlackierung beträgt 0,1 bis 3 g/qm, bevorzugt 0,2 bis 1,5 g/qm.

7. Verwendung nach Anspruch 1, dadurch gekennzeichnet, daß die Klebmasse eine lösemittelhaltige Klebemasse auf Basis von Styrol-Isopren-Styrol Copolymeren ist.

8. Verwendung nach Anspruch 1, dadurch gekennzeichnet, daß die Auftragsmenge der Klebemasse beträgt 15 bis 60 g/qm, bevorzugt 20 bis 30 g/qm.
